# EUROPÄISCHE PATENTANMELDUNG

(11) **EP 1 186 398 A1**
(43) Veröffentlichungstag der Anmeldung: **13.03.2002**
(21) Anmeldenummer: 00810801.1
(22) Anmeldetag: 05.09.2000
(51) Int. Cl.: B29C 63/00, B29C 63/48, B29D 24/00

(54) **Kantenschutz für Wabenkern-Verbundplatten**

(71) Anmelder: Alcan Technology & Management AG, 8212 Neuhausen am Rheinfall (CH); Buhmann, Robert, 88239 Wangen/Allg. (DE)
(72) Erfinder: Heisel, Hans Jürgen, 78221 Singen (DE); Buhmann, Robert, 88239 Wangen/Allg. (DE)

(57) **Zusammenfassung**

Verfahren zur Herstellung einer Wabenkern-Verbundplatte mit einem Kantenschutz. Die Wabenkern-Verbundplatte (60) weist einen plattenförmigen Kern (10) mit Zellenstruktur und auf jeder Seite des plattenförmigen Kerns (10) ein mit dem Kern (10) verklebtes Deckblech (20, 30) auf. Die Wabenkern-Verbundplatte (60) weist zudem einen umlaufenden Plattenrand (70) auf, welcher zumindest teilweise mit einem Kantenschutz zu versehen ist, wobei der Plattenrand (70) durch die dem Plattenrand (70) anliegenden Stirnseiten (22, 32) beider Deckbleche (20, 30) begrenzt wird. Der mit einem Kantenschutz zu versehende Plattenrand (70) wird mittels einer oder mehrerer kontinuierlich über diesen Plattenrand (70) geführten Klebstoffdüse/n mit einem Klebstoff unter Druck derart beaufschlagt und gerakelt, dass wenigstens die gegen den Plattenrand (70) hin offene Zellenstruktur des Kerns (10) vollständig mit Klebstoff ausgefüllt wird und die entstehende Klebstoffschicht (40) eine gegen aussen glatte Oberfläche aufweist. Ein beidseits im Wesentlichen ebenes Kantenband (50) wird kontinuierlich auf den vorgängig mit Klebstoff (40) beaufschlagten Plattenrand (70) geführt und verklebt.

## Beschreibung

Die Erfindung betrifft ein Verfahren zur Herstellung einer Wabenkern-Verbundplatte mit einem Kantenschutz, wobei die Wabenkern-Verbundplatte einen plattenförmigen Kern mit Zellenstruktur und auf jeder Seite des plattenförmigen Kerns ein mit dem Kern verklebtes Deckblech aufweist, und die Wabenkern-Verbundplatte einen umlaufenden Plattenrand aufweist, welcher zumindest teilweise mit einem Kantenschutz zu versehen ist, wobei der Plattenrand durch die dem Plattenrand anliegenden Stirnseiten beider Deckbleche begrenzt wird. Die Erfindung betrifft weiter die Verwendung der mit einem Kantenschutz versehenen Wabenkernverbundplatten, hergestellt nach dem erfindungsgemässen Verfahren.

Wabenkern-Verbundplatten bestehen im Wesentlichen aus einem zellen- oder wabenförmigen Kern, welcher üblicherweise von zwei Deckblechen beplankt ist. Die Waben weisen quer verlaufende Zellen auf, welche sich üblicherweise über die ganze Fläche der Deckbleche erstrecken, d.h. die Stirnseiten der Zellen sind jeweils gegen die Deckbleche gerichtet. Derartige flächenförmige Wabenkerne können beispielsweise gemäss den Patentschriften EP 0 531 251 oder US 4,500,380 hergestellt werden. Entsprechende Verbundplatten können beispielsweise gemäss der Patentschrift EP 0 527 109 hergestellt werden und weisen ein geringes spezifisches Gewicht und eine hohe Steifigkeit auf.

Die vorgängig beschriebenen Verbundplatten werden üblicherweise in vorfabrizierte Rahmen eingelegt oder mittels mechanischer Befestigungsmittel, wie Eckwinkel, an Profile oder Bleche befestigt. Die Plattenränder werden somit meistens durch weitere Bauelemente, wie Profile oder Bleche, abgeschlossen. Im Weiteren sind Wabenkernverbundplatten mit einem Kantenschutz bekannt, wobei zur ausreichenden Befestigung des Kantenschutzes mit der Wabenkern-Verbundplatte der zwischen den Deckblechen befindliche Wabenkern im Randbereich ausgefräst wird, so dass eine nutartige Vertiefung entsteht, und ein T- oder L-förmiger Kantenschutz oder ein kubischer, massiver Kantenschutz in die nutartige Vertiefung eingeführt und mit mechanischen Mitteln oder durch Verkleben befestigt wird.

Die aus dem Stand der Technik bekannten Verfahren zum Anbringen eines Kantenschutzes an Wabenkern-Verbundplatten sind technisch aufwendig und teuer, da das mechanische Anbringen von Befestigungsmittel und/oder eine mechanische Bearbeitung der mit einem Kantenschutz zu versehenden Randbereiche der Wabenkern-Verbundplatten notwendig ist.

Ein anderes bekanntes Verfahren zum Anbringen eines Kantenschutzes an Wabenkern-Verbundplatten besteht im Aufbringen von Klebstoff an die Plattenränder und nachfolgendem Aufkleben eines Kantenschutzes. Hierbei resultiert meist eine schlechte Verklebung, da nur die dem Plattenrand zugekehrten Kanten des Wabenkerns und gegebenefalls die diesem Plattenrand zugekehrten Stirnflächen der Deckbleche eine Verklebung mit dem Kantenschutz ergeben, d.h. die Verklebung geschieht im Wesentlichen nur an den Kontaktstellen der Verbundplatte mit dem Kantenschutz. Um eine solche Verklebung zu verbessern, muss dann eine nutartige Vertiefung in den Randbereich hineingearbeitet werden, so dass sich in Verbindung mit einem im Wesentlichen formschlüssigen, T- oder L-förmig ausgebildeten Kantenschutz oder in Verbindung mit einem im Wesentlichen formschlüssigen, kubischen, massiven Kantenschutz eine besser haftende Verklebung ergibt.

Ein weiteres bekanntes Verfahren zum Anbringen eines Kantenschutzes an Wabenkern-Verbundplatten mittels Verkleben besteht im Eingiessen von Klebstoff in die gegen den Randbereich offene Wabenkernstruktur und anschliessendem Aufbringen und Verkleben eines Kantenschutzbandes. Ein derartiges Verfahren bedingt die Verwendung eines Klebstoffes mit niedriger Viskosität und ermöglicht nur das Anbringen eines Kantenschutzes auf einem während der Verklebung im Wesentlichen horizontal liegenden Plattenrand in einem Batch-Verfahren. Speziell geformte Plattenränder können mit einem solchen Verfahren nicht ohne komplizierte Vorrichtungen mit einem Kantenschutz versehen werden.

Aufgabe vorliegender Erfindung ist die Angabe eines kostengünstigen Verfahrens zum kontinuierlichen Anbringen eines Kantenschutzes an Wabenkern-Verbundplatten, welches sich insbesondere auch zum Anbringen eines Kantenschutzes an beliebig geformte Wabenkernverbundplatten, beispielsweise an Verbundplatten mit runder, ovaler oder polygonaler Oberfläche, eignet.

Erfindungsgemäss wird die Aufgabe dadurch gelöst, dass
a) der mit einem Kantenschutz zu versehende Plattenrand mittels einer oder mehrerer kontinuierlich über diesen Plattenrand geführten Klebstoffdüse/n mit einem Klebstoff unter Druck derart beaufschlagt und gerakelt wird, dass wenigstens die gegen den Plattenrand hin offene Zellenstruktur des Kerns vollständig mit Klebstoff ausgefüllt wird und die entstehende Klebstoffschicht eine gegen aussen glatte Oberfläche aufweist, und
b) ein beidseits im Wesentlichen ebenes Kantenband kontinuierlich auf den vorgängig mit Klebstoff beaufschlagten Plattenrand geführt und verklebt wird.

Die Wabenkern-Verbundplatte weist einen plattenförmigen Kern mit zellenförmiger Struktur auf und ist als sogenanntes Sandwichelement ausgestaltet, d.h. der Kern ist beidseitig mit Deckblechen beplankt. Die Deckbleche sind mit dem Wabenkern durch vollflächige, zähelastische Verklebung zwischen Kern und Deckblech verbunden, wobei als Klebstoffe handelsübliche Produkte, beispielsweise auf der Basis von Polyolefinen, z.B. Polyethylen oder Propylen, in Frage kommen. Die Dicke der Klebeschicht bzw. Klebefolie beträgt typischerweise 50 bis 500 µm.

Der Wabenkern stellt beispielsweise ein Bündel von einzelnen Zellen dar. Die einzelnen, zweckmässigerweise zylinderförmigen Zellen können in der Draufsicht einen runden oder polygonalen Querschnitt aufweisen. Entsprechend kann der Wabenkern die Gestalt beispielsweise eines Rohrbündels oder einer Honigwabe aufweisen. Bevorzugte Wabenkerne weisen Zellen mit sechseckigem Querschnitt auf.

Der grosse Vorteil solcher Wabenkern-Verbundplatten liegt darin, dass sie aus einer ebenen Platte als Ausgangsmaterial hergestellt werden können, wodurch es möglich und zweck-mässig ist, solche Verbundplatten in bekannter Weise kontinuierlich herzustellen. Zudem sind derartige Verbundplatten sehr leicht und weisen eine hohe Festigkeit auf.

Der plattenförmige Kern kann aus den verschiedensten Materialien bestehen, beispielsweise aus Kunststoff, Papier oder Metall. Als Metalle eignen sich insbesondere die untenstehenden, für Deckschichten genannten Metalle. Für das erfindungsgemässe Verfahren werden Wabenkerne aus Aluminium oder Aluminiumlegierungen bevorzugt.

Die Deckbleche können aus Kunststoff oder Metall und gegebenenfalls auch aus Holz bestehen. Die Deckbleche können weiter auch Verbundplatten aus einem oder mehrerer der genannten Deckblechmaterialien darstellen.

Geeignete Kunststoffe sind beispielsweise Kunststoffe auf Polyolefinbasis, auf Polyamid-basis, auf Acryl-Butadien-Styrolbasis oder Phenol-Formaldehydharzbasis. Als Deckbleche aus Kunststoff können auch HPL (High Pressure Laminate)-Platten nach EN 438 verwendet werden. Die Kunststoffe können durch Füll- und/oder Verstärkungsstoffe modifizirt sein. Füllstoffe sind beispielsweise Pigmente, wie TiO₂, und feinstteilige Stoffe, z.B. aus der Reihe des Al₂O₃ oder SiO₂. Verstärkungs- und Armierungsstoffe können Fasern, Gewebe, Gewirke oder Vliese aus Glas, Kohlenstoff, thermoplastischen Kunststoffen, Aramid, Kevlar, SiC- oder SiN-Whiskern oder aus natürlichen Materialien, wie Jute, Sisal, Hanf, Baumwolle, Wolle und dergleichen sein.

Deckbleche aus Metall können beispielsweise aus Eisen, Stahl, Zinklegierungen, verzinktem Eisen, Zinnlegierungen, Bronze, Kupferlegierungen oder aus Leichtmetallen und deren Legierungen bestehen. Bevorzugt werden Leichtmetalle oder Leichmetalllegierungen, insbesondere Aluminium und dessen Legierungen.

Mit dem Begriff Deckbleche aus Holz werden beispielsweise Holzplatten, Holzfaserplatten, Holzspanplatten, Holzfurnierplatten oder Schichtholzplatten umfasst. Deckbleche aus Holz können auch Holz-Kunststoff-Kombinationen darstellen, bei denen geeignete Hölzer mit Monomeren, beispielsweise Methylmethacrylat, Vinylacetat, Styrol oder dergleichen, durchtränkt und die Monomere beispielsweise durch Erwärmung oder mittels energiereicher Strahlung zur Polymerisation gebracht werden. Holz-Kunststoff-Kombinationen können auch durch ein Skinpreg-Verfahren, d.h. durch Oberflächenimpregnierung mit Kunsstoffen, hergestellt werden, wobei die Kunststoffe unter geringem Druck verschieden tief in das Holz eindringen, ohne es völlig zu durchtränken.

Die Gesamtdicke der Wabenkern-Verbundplatte kann in weiten Bereichen variieren. Der plattenförmige Wabenkern weist Zellen einer Höhe von etwa 3 bis 60 mm, insbesondere 5 bis etwa 25 mm, auf. Die Dicke der Deckbleche liegt bevorzugt zwischen 0.2 und 2.5 mm, insbesondere zwischen 0.3 und 1.5 mm.

Die für das erfindungsgemässe Verfahren zu verwendenden Wabenkern-Verbundplatten können eine beliegige Gestalt aufweisen und können insbesondere quadratische, rechteckige, gekrümmte, beispielsweise runde oder ovale, oder polygonale Bereiche aufweisen. Dabei beziehen sich die genannten Formen auf die Draufsicht auf die freie Oberfläche einer Deckschicht der Verbundplatte. Die Formgebung der Wabenkern-Verbundplatte auf vorbestimmte Flächenmasse geschieht zweckmässigerweise durch Sägen oder Fräsen. Durch eine derartige Formgebung wird die zellenförmige Struktur des Kerns teilweise aufgebrochen, so dass nach aussen Stege entstehen, welche am Plattenrand entweder die Form einer geraden Linie oder einer ebenen Fläche einehmen. Nach der Formgebung der Wabenkern-Verbundplatte für die beabsichtigte Verwendung weist die Wabenkern-Verbundplatte einen umlaufenden Plattenrand auf, welcher beispielsweise bei einer quadratischen oder rechteckförmigen Wabenkern-Verbundplatte aus vier ebenen Plattenrändern besteht, bei einer runden Wabenkern-Verbundplatte jedoch nur einen zylinderförmigen Plattenrand umfasst.

In einer bevorzugten Ausführungsform wird zumindest der mit einem Kantenschutz zu versehende Bereich des Plattenrandes derart ausgebildet, dass der Plattenrand die dem Plattenrand anliegenden Stege der Zellenstruktur enthält.

In einer weiter bevorzugten Ausführungsform enthält der mit einem Kantenschutz zu versehende Bereich des Plattenrandes die Stege der Zellenstruktur und ist derart ausgebildet, dass eine in diesem gesamten Bereich an den Plattenrand angelegte Tangentialebene eine gerade Strecke oder eine ebene Fläche ausschneidet, d.h. dass der Plattenrand eine zylinderförmige Mantelfläche eines Zylinders mit der Grundfläche des unteren Deckbleches darstellt. Insbesondere bevorzugt wird dabei ein Plattenrand in Form eines geraden Zylinders.

Die Kantenbänder sind bevorzugt flache Bänder mit beidseits im Wesentlichen ebenen Oberflächen. Die Oberflächen, insbesondere die im verklebten Zustand freien Oberflächen, können jedoch auch ganz oder teilweise eine strukturierte Oberfläche oder über die ganze Länge oder über Teillängen sich erstreckende, funktionelle Anformungen, wie Nuten oder Stege oder dergleichen, aufweisen.

Die Kantenbänder können aus einem beliebigen, sich in einem festen Aggregatzustand befindlichen Material bestehen, beispielsweise aus Metall, Kunststoff oder Holz. Als Kunststoffe werden Polyolefine, Polyvinylchlorid (PVC), Acrylnitril-Butadien-Styrol (ABS) oder Polyurethane (PUR) bevorzugt. Als Polyolefine kommen insbesondere Polyethylene, Polypropylene, Polybutene, Polyisobutene und Copolymere aus unterschiedlichen Olefinen, wie beispielsweise Ethylen mit Propylen, in Frage. Als Metalle kommen beispielsweise verzinktes Eisen, rostfreier Stahl, Zinklegierungen, Zinnlegierungen, Bronze, Kupferlegierungen oder Leichtmetallen und deren Legierungen in Frage. Bevorzugt werden Leichtmetalle oder Leichmetalllegierungen, insbesondere Aluminium und dessen Legierungen. Kantenbänder aus Holz können in Form eines dünnen Bandes aus Holz oder in Form eines Holzfaser-, Holzspan-, Holzfurnier- oder Schichtholzbandes verwendet werden.

In einer bevorzugten Ausführungsform des erfindungsgemässen Verfahrens ist das mit dem Plattenrand zu beaufschlagende Kantenband, insbesondere an der mit der Wabenkern-Verbundplatte zu verklebenden Seite, klebstofffrei. In einer weiter bevorzugten Variante wird keinerlei Vorbehandlung der zu verklebenden Oberflächen der Kantenbänder durchgeführt.

In einer weiteren bevorzugten Ausführungsform des erfindungsgemässen Verfahrens können die Oberflächen der Kantenbänder, insbesondere die mit dem Plattenrand zu verklebenden Oberflächen, vorgängig der Beaufschlagung mit dem Plattenrand einer Vorbehandlung unterzogen werden, beispielsweise durch Beaufschlagung mit einem Primer, insbesondere mit einem Haftvermittler, und/oder mit einem Klebstoff, oder die Oberflächen der Kantenbänder können einem Plasmaätzprozess unterworfen werden.

Als Klebstoffe eignen sich alle handelsüblichen Klebstoffe, welche einerseits unter Druckbeaufschlagung die dem Plattenrand anliegende, offene Wabenkernstruktur vollständig ausfüllen und eine ausreichend trennfeste Verbindung des Kantenbandes mit dem Plattenrand bewirken, sofern solche Klebstoffe während dem Verkleben keine flüchtigen Lösungsmittel freisetzen. Klebstoffe, welche während der Verklebung flüchtige Lösungsmittel freisetzen, eignen sich, der kontinuierlichen Klebstoffbeaufschlagung des Plattenrandes und der nachfolgenden, kontinuierlichen Beaufschlagung des Plattenrandes mit einem Kantenband wegen, weniger für das erfindungsgemässe Verfahren, da das Kantenband möglichst dicht an die Deckbleche anliegen soll und somit kein Raum für das Entweichen von Lösungsmittel vorhanden ist. Klebstoffe, welche aufgeschäumt werden müssen, eignen sich für das erfindungsgemässe Verfahren ebenfalls nicht, da die für das Schäumen notwendigen Bedingungen in einem kontinuierlichen Verfahren nur mit aufwendigen Vorrichtungen erreicht werden können.

Für das erfindungsgemässe Verfahren können physikalisch oder chemisch abbindende Klebstoffe verwendet werden, bei welchen während der Verklebung keine flüchtigen Lösungsmittel freigestzt werden. Besonders bevorzugt werden physikalisch oder chemisch abbindende Klebstoffe ohne flüchtige Lösungsmittel.

Als physikalisch abbindende Klebstoffe ohne flüchtige Lösungsmittel kommen Schmelzklebstoffe, wie beispielsweise Ethylen-Vinylacetat, Polystyrol mit Elastomer auf der Basis von Butadien modifiziert, Polyamid oder Polyester, und Plastisol-Klebstoffe, wie PVC-Pulver mit Weichmacher und Haftvermittler, in Frage.

Als chemisch abbindende Klebstoffe ohne flüchtige Lösungsmittel kommen ein- oder mehrkomponentige Reaktionsklebstoffe in Frage. Dabei können chemisch abbindende Reaktionsklebstoffe beispielsweise Zweikomponentenklebstoffe aus Epoxidharzen und Säureanhydriden bzw. Polyaminen, oder aus Polyisocyanate und Polyole sein, welche eine Polyadditionsreaktion eingehen. Weiter geeignete Zweikomponentenklebstoffe sind ungesättigte Polyester mit Styrol oder Methacrylaten, insbesondere Styrol- oder Methyl-Metacrylat, welche eine Polymerisationsreaktion eingehen. Geeignete Einkomponenten-Klebstoffe, welche eine Polymerisationsreaktion eingehen, sind beispielsweise Cyanacrylate oder Methacrylate.

Als physikalisch abbindende Klebstoffe, bei welchen vor der Verklebung flüchtige Lösungsmittel freigestzt werden, eignen sich beispielsweise Elastomere, Polyurethane (PUR), Polychloropren oder Polystyrol mit Elastomer auf der Basis von Butadien modifiziert. Im Weiteren eignen sich Vinylacetat-, Vinylchlorid- und Vinylidenchlorid-Copolymere.

Als chemisch abbindende Klebstoffe, bei welchen keine flüchtigen Lösungsmittel freigestzt werden, eignen sich beispielsweise ungesättigte Polyester mit Styrol oder Methacrylat.

Das Aufbringen des Klebstoffes auf den Plattenrand geschieht mittels einer oder mehrerer kontinuierlich über den Plattenrand geführten Klebstoffdüse/n unter Druckbeaufschlagung des Klebstoffes, wobei die pastöse Klebstoffmasse nach dem Auftrag zweckmässigerweise gerakelt wird. Das Rakeln der Klebstoffmasse bewirkt ein glattes Verstreichen des Klebstoffes, so dass der Plattenrand eine flächenförmige Klebstoffschicht aufweist, und kann durch eine separate Rakelschneide oder durch den Rand der Klebstoffdüse/n geschehen. In einer bevorzugten Ausführungsform des Verfahrens geschieht der Klebstoffauftrag auf den Plattenrand mit nur einer Klebstoffdüse.

Der Öffnungsquerschnitt der für das Aufbringen des Klebstoffes auf den Plattenrand erforderlichen Klebstoffdüse kann rund, oval oder polygonal sein. Der Öffnungsquerschnitt der Düse wird in Abstimmung mit der Klebstoff-Viskosität gewählt. Die Druckbeaufschlagung des aus der Düse austretenden Klebstoffes wird in Funktion der Klebstoff-Viskosität derart gewählt, dass die gegen den Plattenrand offene Wabenkernstruktur während dem kontinuierlichen Klebstoffauftrag vollständig gefüllt wird, wobei ein Überschwappen von Klebstoff von einer Wabenkernvertiefung in eine benachbarte Vertiefung oder ein Überschwappen über die Deckbleche vermieden wird.

Bei der Durchführung des erfindungsgemässen Verfahrens richtet sich die zur Verklebung des Kantenbandes mit dem Plattenrand benötigte Temperatur, Druck sowie die Einwirkungszeit nach der Art des verwendeten Klebstoffes.

In einer bevorzugten Ausführungsform des erfindungsgemässen Verfahrens geschieht die Klebstoffbeaufschlagung des mit einem Kantenschutz zu versehenden Plattenrandes und das nachfolgende Aufkleben des Kantenbandes simultan nacheinander, so dass beide Verfahrensschritte in einem einzigen, kontinuierlichen Arbeitsgang durchgeführt werden. Dabei kann das Kantenband zweckmässigerweise von einer Rolle kontinuierlich abgewickelt und dem Verfahren zugeführt werden.

Weiter bevorzugt kann bei dicken Plattenrändern, bei denen für den Kantenschutz ein breites Kantenband erforderlich ist, als Kantenband ein extrudiertes und/oder gezogenes und/oder aus Plattenware geschnittenes Band, das als Stangenware dem erfindungsgemässen Verfahren kontinuierlich zugeführt wird, verwendet werden. Dabei kommen als Plattenware insbesondere die für die Deckbleche genannten Materialien in Frage.

Weiter bevorzugte Ausführungsformen des erfindungsgemässen Verfahren sind in den Ansprüchen 2 bis 7 beschrieben.

Das erfindungsgemässe Verfahren eignet sich auch zum Anbringen eines Kantenschutzes bei Wabenkern-Verbundplatten unterschiedlicher Dicke. Zudem ist das erfindungsgemässe Verfahren auch für das Anbringen eines Kantenschutzes an Wabenkern-Verbundplatten mit sich entlang dem Plattenrand verändernder Plattendicke geeignet. Hierbei ist festzuhalten, dass Wabenkern-Verbundplatten oft keine konstante Verbundplattendicke aufweisen.

Mit einem erfindungsgemässen Kantenschutz versehene Wabenkern-Verbundplatten haben einen breiten Anwendungsbereich und eignen sich insbesondere für Möbel, Inneneinrichtungen, Sportgeräte, Trennwände, Verkleidungen, Messestände oder Verschalungen jeglicher Art oder als Bauteile für Strassen- oder Schienenfahrzeuge oder Flugzeuge oder im Bauwesen.

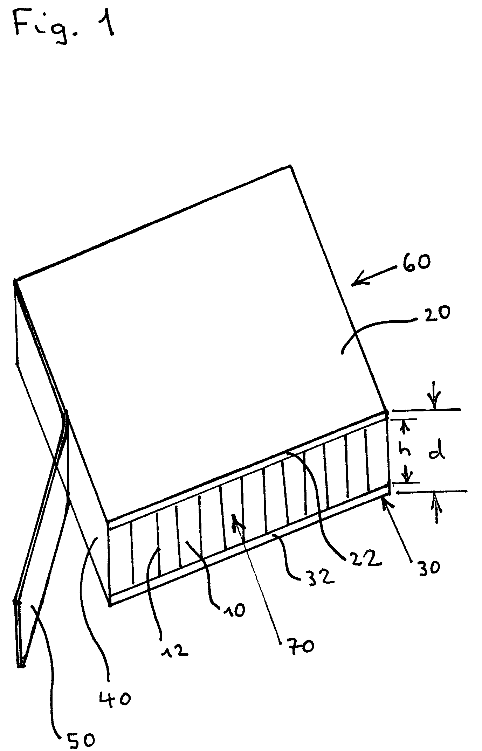

Figur 1 zeigt schematisch eine perspektivische Ansicht einer Wabenkernverbundplatte mit einem teilweise aufgeklebten Kantenschutz.

Die in Fig. 1 gezeigte Verbundplatte 60 weist einen beispielsweise aus Aluminium gefertigten Wabenkern 10 auf. Der Wabenkern 10 ist beidseitig beplankt mit je einem Deckblech und weist somit ein oberes Deckblech 20 und ein unteres Deckblech 30 auf. Die Deckbleche 20, 30 sind beispielsweise aus einer Aluminiumlegierung. Die Verbindung zwischen den Deckblechen 20, 30 und Wabenkern 10 erfolgt über eine vollflächige, zähelastische Klebstoffschicht, die in Fig. 1 aus Gründen der besseren Übersicht nicht dargestellt ist.

Die in Fig. 1 dargestellte Wabenkern-Verbundplatte 60 weist beispielhaft eine rechteckige Form auf. Prinzipiell kann die Verbundplatte jedoch eine durch Sägen oder Fräsen bearbeitete Form beliebiger Gestalt aufweisen. Der vordere Plattenrand 70 enthält die Stirnseiten 22, 32 der Deckbleche 20, 30 sowie die Stege 12 der an den Plattenrand 70 angrenzenden Zellen der Wabenstruktur des Kerns 10.

Der linke Plattenrand der in Fig. 1 dargestellten Verbundplatte 60 ist mittels einer Klebstoffdüse (nicht dargestellt) mit Klebstoff beaufschlagt worden, wobei von Aussen nur eine flache Klebstoffschicht 40, welche diesen Plattenrand zwischen den beiden freien Oberflächen der Deckbleche 20, 30 vollständig überdeckt, zu sehen ist. Auf diese Klebstoffschicht 40 ist bereits ein Kantenband 50 teilweise aufgeklebt.

Das Kantenband 50 kann auch breiter als die Dicke d der Verbundplatte 60 gewählt werden. Das Kantenband 50 kann in diesem Fall ein oder beidseitig über die Deckbleche 20, 30 überstehen und einen überstehenden Rand (nicht eingezeichnet) ausbilden. Fallweise kann dieser Rand spanabhebend oder mittels einem Laser bearbeitet werden, so dass der überstehende Rand beispielsweise in eine vorbestimmte Form, insbesondere in eine gerundete oder aufgerauhte Form, gebracht oder bündig bis zum Deckblech 20, resp. 30, abgetragen werden kann.

Im Weiteren können am Kantenband 50 die Kanten beispielsweise durch spanabhebende Bearbeitung oder durch Behandlung mit einem Laser gerundet, abgeschrägt oder mit Nuten oder anderen funktionellen Elementen versehen werden, oder es können Stege oder andere funktionelle Elemente nachträglich an- oder aufgebracht werden.

## Patentansprüche

1. Verfahren zur Herstellung einer Wabenkern-Verbundplatte mit einem Kantenschutz, wobei die Wabenkern-Verbundplatte (60) einen plattenförmigen Kern (10) mit Zellenstruktur und auf jeder Seite des plattenförmigen Kerns (10) ein mit dem Kern (10) verklebtes Deckblech (20, 30) aufweist, und die Wabenkern-Verbundplatte (60) einen umlaufenden Plattenrand (70) aufweist, welcher zumindest teilweise mit einem Kantenschutz zu versehen ist, wobei der Plattenrand (70) durch die dem Plattenrand (70) anliegenden Stirnseiten (22, 32) beider Deckbleche (20, 30) begrenzt wird,
**dadurch gekennzeichnet, dass**
a) der mit einem Kantenschutz zu versehende Plattenrand (70) mittels einer oder mehrerer kontinuierlich über diesen Plattenrand (70) geführten Klebstoffdüse/n mit einem Klebstoff unter Druck derart beaufschlagt und gerakelt wird, dass wenigstens die gegen den Plattenrand (70) hin offene Zellenstruktur des Kerns (10) vollständig mit Klebstoff ausgefüllt wird und die entstehende Klebstoffschicht (40) eine gegen aussen glatte Oberfläche aufweist, und
b) ein beidseits im Wesentlichen ebenes Kantenband (50) kontinuierlich auf den vorgängig mit Klebstoff (40) beaufschlagten Plattenrand (70) geführt und verklebt wird.

2. Verfahren nach Anspruch 1, **dadurch gekennzeichnet, dass** die Klebstoffschicht (40) die an den Plattenrand angrenzenden Stege (12) der Zellenstruktur des Kerns (10) vollständig überdeckt.

3. Verfahren nach Anspruch 1 oder 2, **dadurch gekennzeichnet, dass** die Dicke (h) des zwischen den Deckblechen liegenden Kerns (10) gemessen und der Öffnungsquerschnitt der Klebstoffdüse derart gewählt wird, dass dessen zwischen den Deckblechen (20, 30) liegender Durchmesser der gemessenen Dicke (h) des Kerns (10) entspricht.

4. Verfahren nach Anspruch 1 oder 2, **dadurch gekennzeichnet, dass** die Dicke (h) des zwischen den Deckblechen (20, 30) liegenden Kerns (10) entlang des Plattenrandes (70) kontinuierlich gemessen und der Öffnungsquerschnitt der Klebstoffdüse kontinierlich derart eingestellt wird, dass dessen zwischen den Deckblechen (20, 30) liegender Durchmesser stets der an diesem Ort gemessenen Dicke (h) des Kerns (10) entspricht.

5. Verfahren nach Anspruch 1 oder 2, **dadurch gekennzeichnet, dass** die Klebstoffschicht (40) die an den Plattenrand (70) angrenzenden Stirnseiten (22, 32) der Deckbleche (20, 30) überdeckt.

6. Verfahren nach Anspruch 5, **dadurch gekennzeichnet, dass** die Dicke (d) der Wabenkern-Verbundplatte (60) gemessen und der Öffnungsquerschnitt der Klebstoffdüse derart gewählt wird, dass dessen zwischen den frei liegenden Deckblechoberflächen liegender Durchmesser der gemessenen Dicke (d) der Wabenkern-Verbundplatte (60) entspricht.

7. Verfahren nach Anspruch 5, **dadurch gekennzeichnet, dass** die Dicke (d) der Wabenkern-Verbundplatte (60) entlang des Plattenrandes (70) kontinuierlich gemessen und der Öffnungsquerschnitt der Klebstoffdüse kontinierlich derart eingestellt wird, dass dessen zwischen den frei liegenden Deckblechoberflächen liegender Durchmesser stets der an diesem Ort gemessenen Dicke (d) der Wabenkern-Verbundplatte (60) entspricht.

8. Verfahren nach einem der Ansprüche 1 bis 7, **dadurch gekennzeichnet, dass** das Kantenband (50), insbesondere an der mit der Wabenkern-Verbundplatte (60) zu verklebenden Seite, klebstofffrei ist.

9. Verfahren nach einem der Ansprüche 1 bis 7, **dadurch gekennzeichnet, dass** das Kantenband (50) vorgängig der Beaufschlagung mit dem Plattenrand (70), insbesondere an der mit der Wabenkern-Verbundplatte (60) zu verklebenden Seite, mit einem Primer, insbesondere mit einem Haftvermittler, und/oder mit einem Klebstoff beaufschlagt wird.

10. Verfahren nach einem der Ansprüche 1 bis 9, **dadurch gekennzeichnet, dass** die Klebstoffbeaufschlagung des mit einem Kantenschutz zu versehenden Plattenrandes (70) und das nachfolgende Aufkleben des Kantenbandes (50) simultan nacheinander durchgeführt werden.

11. Verfahren nach einem der Ansprüche 1 bis 10, **dadurch gekennzeichnet, dass** der Wabenkern (10) und die Deckbleche (20, 30) aus Aluminium oder Aluminiumlegierungen bestehen.

12. Verwendung der mit einem Kantenschutz versehenen Wabenkern-Verbundplatten, hergestellt nach dem Verfahren gemäss einem der Ansprüche 1 bis 11, zur Herstellung von Möbeln, Inneneinrichtungen, Sportgeräten, Trennwänden, Verkleidungen, Messeständen oder Verschalungen jeglicher Art oder als Bauteile für Strassen- oder Schienenfahrzeuge oder Flugzeuge oder im Bauwesen.
